# EUROPEAN PATENT APPLICATION

(11) **EP 2 006 776 A1**
(43) Date of publication of application: **24.12.2008**
(21) Application number: 07110230.5
(22) Date of filing: 13.06.2007
(51) Int. Cl.: G06F 13/38, G06F 13/40

(54) **Modularized channel technology with expansion of different IO output interfaces**

(71) Applicant: Sunix Co., Ltd., Sindain City T'ai pei 231 (TW)
(72) Inventor: Lin, Ming-Cheng, Taipei County 231 (TW)
(74) Representative: Jannig, Peter

(57) **Abstract**

A kind of modularized channel technology with expansion of different 10 output interfaces, hereafter called MIB (modular industrial bus) system, which consists of an interface card carrying control chip, a BUS transmission interface, an expansion board, and a hot-plug capacity IO output module; the said interface card carrying control chip can be used to convert output data into communication transmission standard suitable for transmission interface and transmit the data to expansion board through wired or wireless communication interface and then output the IO data through the several sets of output modules (blocks) installed on the expansion board; the present invention allows users to instantly expand or replace different output interfaces and output ports according to different requirements and hot plug-in methods in order to resolve the problem of many specifications and complexities that conventional technology faces due to different types of interface cards, output interfaces, and output ports.

## Description

### FIELD OF THE INVENTION

The present invention is related to a kind of modular channel technology with expansion of different IO output interfaces to output integrated information through all kinds of interface expansion cards or hosts and a kind of flexible IO output technology using different module through modularized channel technology called MIB (Modularized Industrial Bus) system.

### BACKGROUND OF THE INVENTION

In the conventional computer hardware equipment, the application of various kinds of interface cards is playing an important role. Therefore, the motherboard of a computer is often installed with all kinds of interface cards. The function of the interface cards will have different output interfaces based on their functions (e.g. RS-232, RS-422/485, or Analog/Digital 10). And these output interfaces have different number of output ports dependent on the hardware connected or customer's application environment (e.g. port-1/2/4/8/16/32). Hence, looking from the angle of manufacturers, the production and sales of mixing types of interface cards, output interfaces, and number of output ports will generate tremendous large number of interface card specifications. This will create a large burden to the manufacturers and sales agents.

To users, the expansion interface will have to be changed with the evolution of technology when the transmission interface is undergoing changes. However, this will be a huge investment and resource consuming to the hardware equipment. For example, to move from ISA or PCI to PCI-Express users have to change the existing system if he wants to renew the hardware system configuration. This will utilize a large amount of resource and cost. This is why the major reason why the renewal of interface in the current stage of industrial product is much slower than the commercial specifications . Currently the example most often heard in the industry is for the existing systems of industrial equipment installed five years ago. If one of the systems is out of order, whether to purchase new system at huge cost or to look for the rare product five years ago at expensive cost in order to meet the environment of "all oldies". The above usage condition renders users in dilemma.

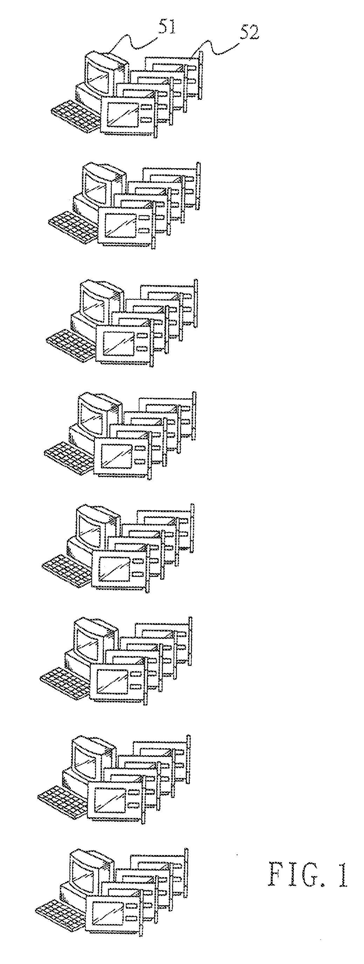

Please refer to Figure 1, which is the illustration of the conventional output structure of an interface card. It can be seen from the figure that, in the general large industrial control application (e.g. robotic arm control monitoring in wafer fab plant), user must use eight industrial computers 51 and 32 pieces of interface cards 52 (note: calculated based on 4 BUS expansion slots per computer and 8 ports per interface card) if he were to expand to 256 RS-232 or RS-485 serial transmission ports. Each computer must also go through complicated operational settings in order to complete the configuration of hardware equipment. Therefore, it is not difficult to see the huge hardware configuration and complexity. In addition, how to ensure the maintenance or updating of equipment for the above hardware under long periods of operating environment without affecting the overall operation, e.g. power company or mass transportation, etc., poses the problem hard to breakthrough for conventional technology.

From this it is easy to see the problem and shortcoming derived from the conventional technology that is not a proper design and desperately needs improvement.

In view of the problems and deficiency, the inventor of this invention has devoted a lot of effort in innovative ideas and time in research and finally completed the modularized channel technology (MIB system) with different IO output interfaces.

### SUMMARY OF THE INVENTION

The purpose of this invention is in providing a kind of modularized (block) channel technology with expansion of different IO output interfaces, which is capable of effectively consolidating all kinds of interface cards with different output interface and number of output ports that allows the manufacturers and sales agents to easily resolve the complicated problems in manufacturing and stocking inventory through the flexible combination of expansion boards and output modules and also allows users flexibility in choosing or replacing the required hardware specifications.

"Modularized expansion extension structure" is one of the features of the main purpose of this invention. It provides a kind of modularized channel technology with expansion of different 10 output interfaces that allows different output modules (blocks) to combine together through interconnected expansion boards; also allows interconnection by selecting different transmission functional interfaces (e.g. RS-232 modules (blocks), and RS-422/485 modules (blocks) for user's convenience in using different IO interfaces and expansion of number of ports in a single universal BUS transmission interface. The universal BUS could be either tangible wired cable transmission or wireless technology transmission for achieving the purpose of data exchange.

"Modularized (block) Hot Plug-in (replacement) design" is the second purpose and important breakthrough of this invention in providing a kind of modularized (block) channel technology with expansion of different IO output interfaces that could meet the requirement of 24HR non-stop operation for the present industrial and commercial systems today, including automatic control, monitoring, and data processing systems in practical applications such as power company, mass transportation system, factory production equipment, and tunnel monitoring. The said IO module (block) could be connected to or separated from the expansion board independently through hot plug-in (replacement.) method under the situation or without shutting down the host system and also could ensure the continual operation of IO output module (block) in use without creating interruption or shutdown problems to the operation of the whole system and is a great convenience to the repair, replacement, or regular maintenance to users and also an innovative revolution. For example, if the power system must be shutdown for repair or for replacement of module due to mechanical breakdown or module damage, this MIB system could be used to replace the damaged equipment directly by allowing the system to operate continuously and drastically reduces the loss of potential risk due to the shutdown of system.

"Cutting down hardware configuration costs" is one of the important features and the purpose of this invention, which is to provide a kind of modularized (block) channel technology with expansion of different IO output interfaces that, in addition to having excellent expansion and integration function, it also has the advantages of convenience in use, effectively increases the hardware overall performance, ease of configuration, wide range of use, low cost, and long usable life, etc. Also, the present structure must replace the card and the whole system when upgrading the PC host hardware. However, after using the MIB configuration, only the universal BUS interface card (Host Controller) is required to be replaced while the boards and modules can be used continuously. For example, only a PC host and a piece of universal BUS interface card (Host Controller) is required to be replaced when upgrading the old PC interface to PCI-Express interface and other parts can be continued to be used to achieve the purpose of upgrading, greatly reducing the configuration cost of replacing peripheral hardware and related IO connection of the system required for the upgrading of the hardware, which is also a great breakthrough of MIB system.

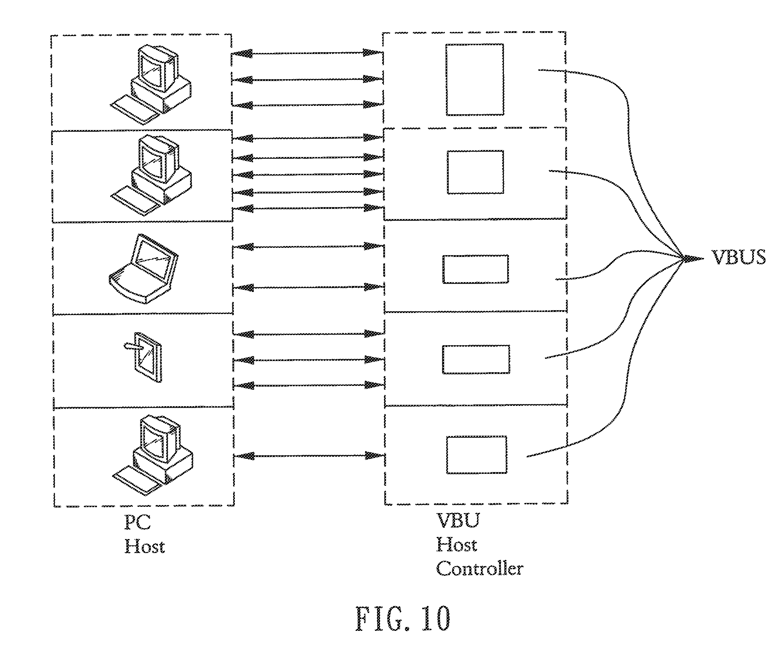

The MIB system of modularized channel technology with expansion of different IO output interface that could achieve the above invention object consists of interface card carrying control chip, transmission interface (universal BUS), expansion board, and output module (block); the said interface card carrying the control chip could convert all output data into the format meeting transmission interface and transmit the data from transmission interface to expansion board, and then output data through the several sets of output modules (blocks) installed on expansion board. Therefore, the said universal BUS is playing an important role in the transmission mode. This expansion card interface, including ISA, PCI, PCI, PCI-Express, PCMCIA, CardBus, ExpressCard, Compact-PCI, PC/104+, PXI, RF, and Bluetooth, etc. currently defined as common BUS or communication protocol by the industry, and the host computer that transmits through Ethernet, all could perform conversion through "Intelligent BUS Master Controller" and convert data into the universal BUS under MIB system for transmission (as shown in Figure 10). And in the board design including the universal BUS and power transmission mechanism, the boards could expand each other based on the actual requirement in order to achieve the modular purpose. Also in the expansion of module (block), it is possible for users to expand the different modules of existing communication interfaces such as RS-232 module (block), RS-422/485 module (block), Digital IO module (block), Analog module (block), Ethernet module (block), Fiber optical module (block), power module (block), and anti-surge protection module (block), etc. by themselves based on their actual needs.

### BRIEF DESCRIPTION OF THE DRAWINGS

Figure 1 is the current illustration of the conventional output structure of the interface card;
Figure 2 is the system structural diagram of the MIB with the expansion of different IO output interface of the embodiment of the present invention;
Figure 3 is the illustration of the embodiment of the expansion boards and output module of the MIB with different expansion IO output interface;
Figure 4 is the illustration of the embodiment of the modular industrial bus technology with the said expansion of different IO output interface;
Figure 5 is the illustration of the embodiment for the improvement of the conventional implementation shown in Figure 1 for the MIB with expansion of different IO output interface;
Figure 6 is the illustration of the expanded embodiment of MIB with expansion of different IO output interfaces
Figure 7 is the illustration of embodiment of the MIB with expansion IO output interface using hot plug-in;
Figure 8 is the illustration of embodiment of the said modularized channel technology with different expansions of IO output interfaces in wired or wireless method;
Figure 9 is the illustration of the embodiment of the said modularized channel technology with different expansions of IO output interfaces applied in system upgrading;
Figure 10 is the illustration of the embodiment of the said modularized channel technology with different expansions of 10 output interfaces used in data format conversion. All different 10 interface cards inserted on different hosts can be converted to modularized industrial bus. Such bus is the transmission bus used in the MIB structure.

### DETAILED DESCRIPTION OF THE PREFERRED EMBODIMENTS

The system configuration of the present modularized (block) channel technology with expansion of different IO output interface is to output the integrated data through expansion cards all kinds of interfaces or through host computer and through universal BUS transmission interface through wired cable or wireless transmission and use modularized (block) channel technology to utilize different modules (blocks) in order to flexibly expand different IO output, hence is called MIB (Modularized Industrial Bus) system.

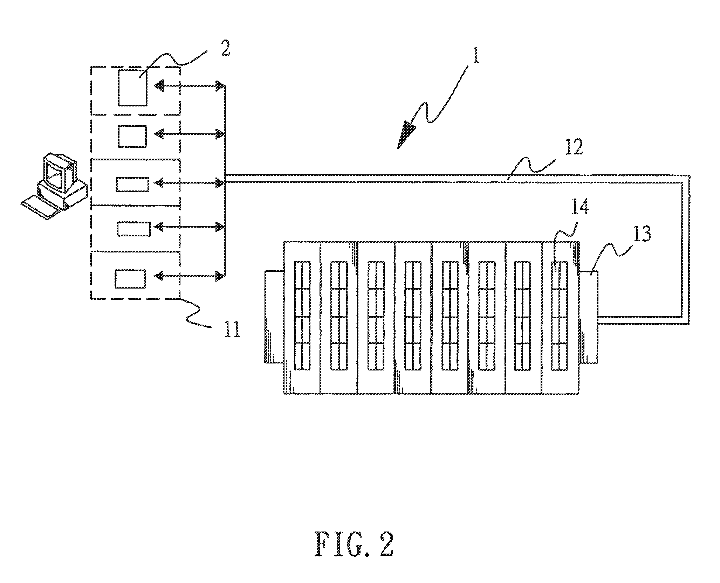

Please refer to Figure 2 which is the preferred embodiment of the structural diagram of the modularized channel technology with expansion of different IO output interface. From the diagram it can be seen that the present invention has the modularized (block) channel structure 1 with expansion interface card (MIB (Modularized Industrial Bus) system) including:
a carried channel control chip 2 for the conversion of output data of interface card 11 into the format suitable for universal BUS transmission interface 12;
a universal BUS transmission interface 12 for the data after completion of conversion to be transmitted to several expansion boards 13;
an expansion board 13 providing several insertion slots for the insertion by several output modules (block) 14 and for converting input data to output module (block) 14 through the formation of connection with universal BUS transmission interface 12 ; the said expansion board 13 has a power transmission mechanism in addition to the data transmission mechanism and hence the same insertion slot could also provide insertion for power module (block).

An output module (block) 14 can be the combination of different output interface and number of output ports and also could be inserted into an expansion board 13 and further form an output terminal for the output of data.

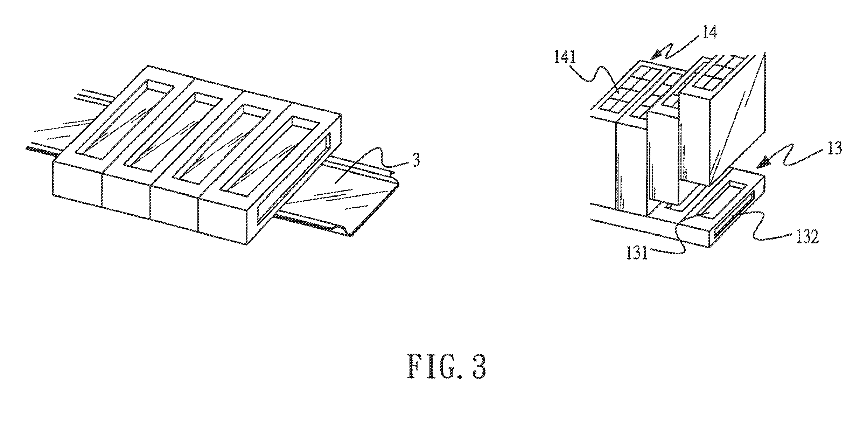

Please refer to Figure 3, which is the illustration of the expansion board and output module (block) of the preferred embodiment of the modularized (block) channel technology with expansion of different IO output interfaces. It can be seen from the diagram that the top of the said expansion board 13 is installed with four (or more) connecting slots 131; the two sides of the said expansion board 13 are installed with connecting slots 132 for the insertion of transmitting interfaces, through the transmission interface the expansion board 13 can be connected to another expansion board 13 ; In addition, the bottom of the said expansion board 13 can be connected to a fixed element 3 for the ease of expansion board 13 to be fixed to the Din-Rail or Wall-Mount; the top of the said output module (block) 14 is the output port 141 where the said output module (block) 14 can be the transmission interfaces of all kinds (e.g. RS-232/422/485, AIO, DIO, TTL, and Ethernet, etc), the said output module (block) 14 can be inserted into the connecting slot 131 on the top of expansion board 13 and further to output data from output module (block) 14.

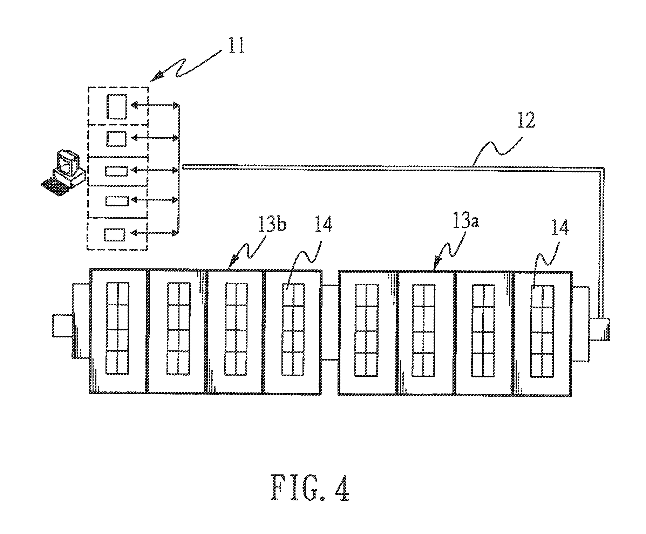

Please refer to Figure 4, which is the illustration of the preferred embodiment of the modularized (block) channel technology wit h expansion of different 10 output interface . It can be seen from the illustration that the output data from the said interface card carrying control chip 11 can be transmitted remotely from universal BUS transmission interface 12 to the first expansion board 13a and also can be serially connected to the second expansion board 13b depending on the needs. And the output module (block) 14 on the first & second expansion boards 13a, 13b, its output interface and number of output ports can be defined and arranged based on the user's need, and the said output module (block) 14 can be replaced using hot plugged-in method under the situation or without shutting down the system and will not result in the effect of interrupting transmission to other modules (blocks) .

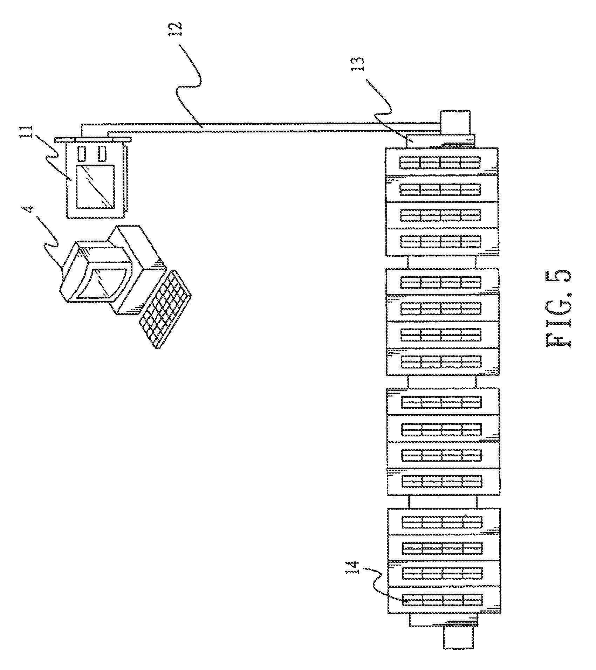

Please refer to Figure 5, which is the illustration of preferred embodiment of the modularized (block) channel technology with expansion of different IO output interfaces for the improvement, of conventional implementing structure of Figure 1. It can be seen from the illustration that, under the preferred embodiment structure of this invention, the user only needs to purchase an industrial computer 4 a piece of interface card carrying control chip 11, 4 expansion boards 13, 32 output modules (blocks) 14, and the universal BUS transmission interface 12 for connection purpose to achieve the function of implementations structure listed in Figure 1 under the simplified hardware conditions. Hence it is possible to reduce the use of 7 industrial computers, and, most importantly, allows user to operate and control 256 output ports through a single computer and resolve the difficulty of operating 8 computers at the same time for the user.

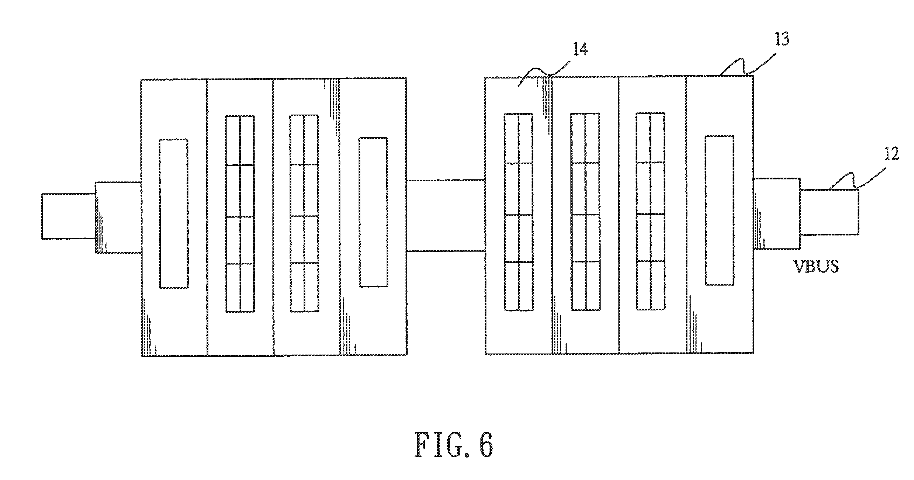

Please refer to Figure 6, which is the illustration of the expanded preferred embodiment of the modularized (block) channel technology with expansion of different IO output interface of the present invention. It can be seen from the figure that "modular expansion extension structure" is one of the major features of this invention, i.e. in providing a kind of modularized (block) channel technology with expansion of different IO output interfaces, which allows different output modules (blocks) 14 to combine together through interconnecting expansion boards 13; between output module (block) 14 and output module (block) 14 it is also possible to select different transmission function interface for interconnection (such as RS-232 module (block), RS-422/485 module (block), and Digital IO module (block)) so as for the user to facilitate the use of different IO interface and number of ports expansion at the same time on a single universal BUS transmission interface 12.

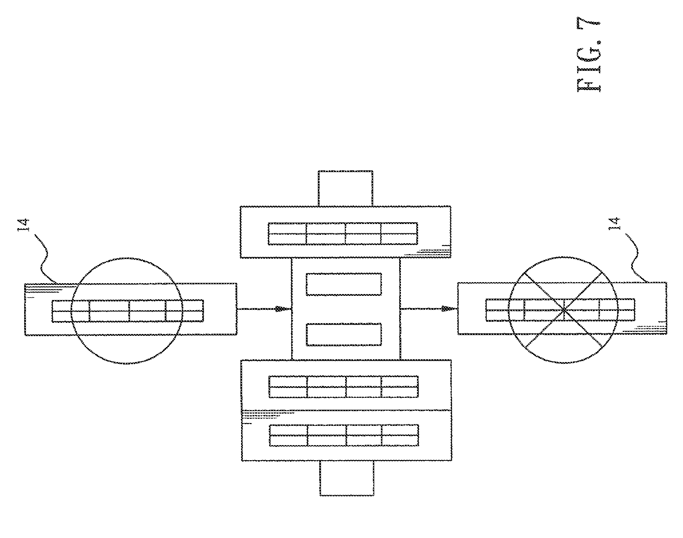

Please refer to Figure 7, which is the illustration of the preferred embodiment of the modularized (block) channel technology with expansion of different IO output interface of the present invention. It can be seen from the figure that the said "modularized (block) hot plug-in (replacement) design" is indeed one of the important breakthroughs of this invention that could meet the requirement of 24HR continuous operation without shutting down the industrial and commercial systems today, including automatic control, monitoring, data processing systems in the practical applications such as power company, mass transportation system, factory production equipment, and tunnel monitoring. The said 10 output module (block) 14 can be connected to or separated from the expansion board independently through hot plug-in (replacement) method under the situation without shutting down host system and also ensure other 10 output module (block) 14 in use to continue operation without interrupting or shutting down the operation of the whole system, which is extremely convenient to user in the repair of replacement or regular maintenance and a great innovative revolution. For example, if the power system must be shutdown for repair or replacement of module due to mechanical failure or module damage, using this MIB system could replace damaged equipment directly while allowing the system to continue operation, drastically reduces the loss created by system shutdown or potential risk.

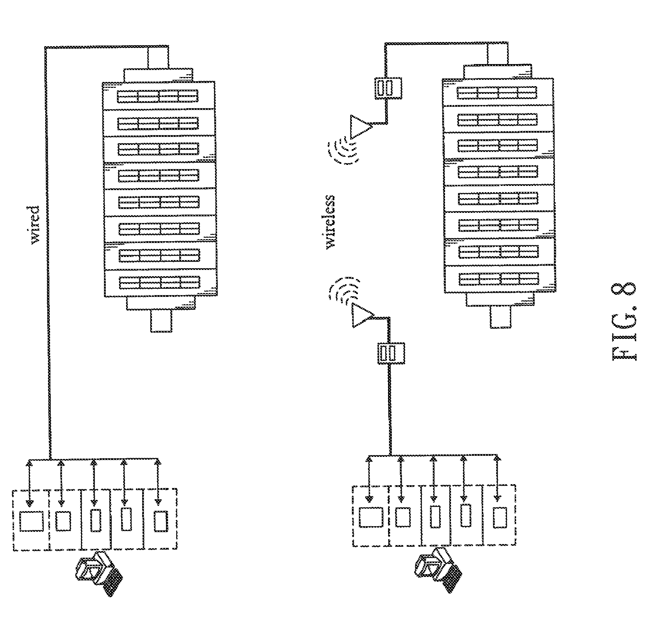

Please refer to Figure 8, which is the illustration of the preferred embodiment of the modularized (block) channel technology with expansion of different IO output interfaces using wired cable or wireless method. It can be seen from the figure that the said universal BUS can either be transmitted using tangible cable or through wireless technology to achieve the object of exchanging data.

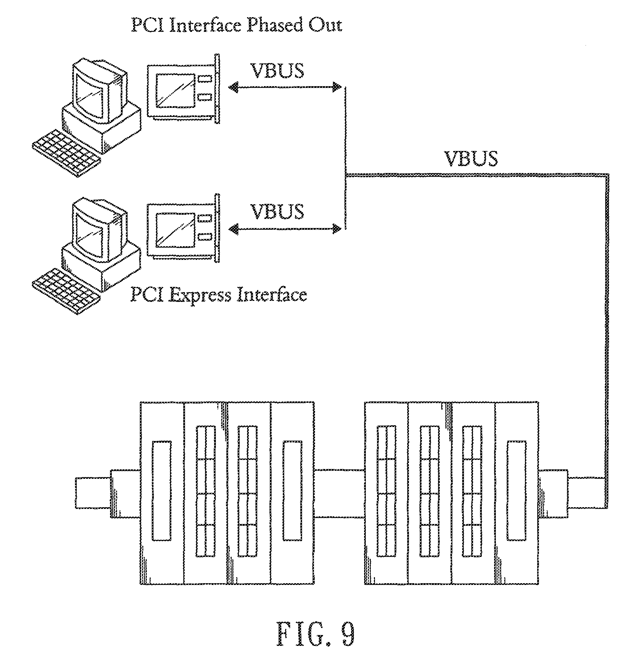

Please refer to Figure 9, which is the illustration of preferred embodiment of the modularized (block) channel with expansion of different 10 output interfaces in the application of system upgrade. It can be seen from the figure that the current configuration must replace the cards and the whole system when upgrading the hardware of PC host system. However, after using MIB configuration, only the replacement of the universal BUS interface card 11 (Host Controller) is required while its board and module still can be used continuously. For example, to upgrade the old PCI interface of the old system to PCI-Express interface, only one host computer 4 and one universal BUS interface card 11 need to be replaced and the rest still can be used continuously in order to achieve the purpose of upgrading, drastically reducing the cost of replacing the hardware and the installation of related IO connection of peripheral system, which is also a major breakthrough of MIB system.

Through the expandable feature of expansion board and output module (block) of this invention, it is possible for the user to instantly expand or replace different interface and output number of ports using hot plug-in method based on different requirements in order to resolve the conventional to many specifications and complicated problem generated by the types of interface cards, output interfaces, and difference in the output number of ports.

The above detailed description is the concrete explanation toward the preferred embodiment of this invention. However, the said embodiment is not limited to the range of patent of the present invention. All equivalent embodiment or changes without departing the art spirit of this invention should all be included into the range of the patent of the present invention.

To summarize, the present invention is not only innovative in the technological thought but also increases many functions stated above than possible for conventional art. It should already meet the prerequisite of being innovative and advancement of legal invention patent. I hereby file the application and hope your authority could grant the patent application as encouragement of invention.

## Claims

1. The modularized (block) channel technology with expandable 10 output interface. The steps are as shown below:
An interface card carrying control chips whereas the output data of the interface card can be converted to the format suitable for USB transmission interface;
a universal USB transmission interface for communicating the data after conversion to several expansion boards;
an expansion board providing several insertion slots for the insertion by several output modules (block) and the input data can be converted to output module(block) through connection of universal USB transmission interface;
An output module which is the combination of different output interfaces and output ports and can be inserted into expansion board and further formed into an output

2. The modularized (block) channel technology with expansion of different IO output interfaces as claimed in Claim 1, wherein the said expansion board can be extended through the universal BUS transmission interface for insertion by more output modules (blocks).

3. The modularized (block) channel technology with expansion of different 10 output interfaces as claimed in Claim 1, wherein the said expansion board is installed with several connection slots; the two sides of the said expansion board are installed with connection slots for insertion by transmission interfaces; through universal BUS transmission interface the expansion board can be connected to expansion board or the interface carrying control chip.

4. The modularized (block) channel technology with expansion of different IO output interfaces as claimed in Claim 1, wherein the bottom of the said expansion board can be connected to a fixed element in order for the expansion board to be fixed to the Din-Rail or Wall-Mount.

5. The modularized (block) channel technology with expansion of different IO output interfaces as claimed in Claim 1, wherein the said module (block) is inserted on the connection slot on the top of the expansion board, whereon its top is the output port that can be any kind of output interface.

6. The modularized (block) channel technology with expansion of different IO output interfaces as claimed in Claim 1, wherein the output interface and output number of output ports of the said output module (block) can be defined and arranged according to the need.

7. The modularized (block) channel technology with expansion of different IO output interfaces as claimed in Claim 1, wherein the said output module under the condition without having to shutdown the system can be changed using hot plug - in (replacement) method.

8. The modularized (block) channel technology with expansion of different IO output interfaces as claimed in Claim 1, wherein the said expansion board in addition to data transmission mechanism also has power transmission mechanism, therefore the said insertion slot can also provide insertion by power module (block).

9. The modularized (block) channel technology with expansion of different 10 output interfaces as claimed in Claim 1, wherein any interface expansion card, as long as carrying channel control chip, can connect, to the same base board and the output module (block) on the base board for transmission in order to achieve the common purpose.

10. The modularized (block) channel technology with expansion of different 10 output interfaces as claimed in Claim 1, wherein the transmission channel used together can be realized through the connection of wired cable or wireless method.
